# EUROPÄISCHE PATENTSCHRIFT

(11) **EP 1 992 836 B1**
(45) Veröffentlichungstag und Bekanntmachung des Hinweises auf die Patenterteilung: **02.10.2013**
(21) Anmeldenummer: 08008409.8
(22) Anmeldetag: 05.05.2008
(51) Int. Cl.: F16F 15/134, F16F 15/123

(54) **Torsionsschwingungsdämpfer**
Torsion vibration damper
Amortisseur de vibrations de torsion

(30) Priorität: 18.05.2007 DE 102007023279
(43) Veröffentlichungstag der Anmeldung: 19.11.2008
(73) Patentinhaber: Schaeffler Technologies AG & Co. KG, 91074 Herzogenaurach (DE)
(72) Erfinder: Mende, Hartmut, 77815 Bühl (DE); Kistner, Reiner, 77836 Rheinmünster (DE); Rusch, Alain, 67700 Waldolwisheim (FR)

(56) Entgegenhaltungen:
- EP-A2- 1 378 683
- DE-A1- 3 721 711
- DE-A1- 3 807 937
- DE-A1- 19 955 852
- GB-A- 2 277 791

## Beschreibung

Die Erfindung betrifft einen Torsionsschwingungsdämpfer mit mindestens zwei entgegen der Wirkung einer Dämpfungseinrichtung mit in Umfangsrichtung wirkenden Energiespeichern zueinander verdrehbaren Teilen, von denen eines mindestens ein Blechformteil mit mindestens einer axialen Anprägung umfasst, die zwischen zwei in Umfangsrichtung benachbarten Energiespeichern eingreift.

Aus der deutschen Offenlegungsschrift DE 37 21 711 A1 ist eine Einrichtung zum Dämpfen von Schwingungen bekannt, bei der Umfangsanschläge durch an Einbuchtungen angepasste Bauteile gebildet sind, die mittels Nieten mit Gehäuseteilen fest verbunden sind. Aus der deutschen Offenlegungsschrift DE 38 07 937 A1 ist eine weitere Einrichtung zum Dämpfen von Schwingungen bekannt, bei der Umfangsanschläge durch scheibenartige Bauteile gebildet sind, welche in axialen Vertiefungen aufgenommen sind.

Aufgabe der Erfindung ist es, einen Torsionsschwingungsdämpfer gemäß dem Oberbegriff des Anspruchs 1 zu schaffen, der eine hohe Lebensdauer aufweist und/oder kostengünstig herstellbar ist.

Die Aufgabe ist bei einem Torsionsschwingungsdämpfer mit mindestens zwei entgegen der Wirkung einer Dämpfungseinrichtung mit in Umfangsrichtung wirkenden Energiespeichern zueinander verdrehbaren Teilen, von denen eines mindestens ein Blechformteil mit mindestens einer axialen Anprägung umfasst, die zwischen zwei in Umfangsrichtung benachbarten Energiespeichern eingreift, wie aus der deutschen Offenlegungsschrift DE 199 55 852 bekannt ist, dadurch gelöst, dass mindestens ein zusätzliches Anschlagelement zur Kraft- und/oder Drehmomentübertragung formschlüssig mit der Anprägung verbunden ist. Als formschlüssige Verbindung wird im Rahmen der vorliegenden Erfindung eine Verbindung von zwei Maschinenelementen durch ihre Formgebung verstanden. Als formschlüssige Verbindung wird insbesondere eine Verbindungsart von Maschinenelementen verstanden, bei der Kräfte und Bewegungen senkrecht zur Berührungsebene durch die Form der an der Verbindung beteiligten Teile übertragen werden. Bei herkömmlichen Torsionsschwingungsdämpfern bilden die Anprägungen selbst Anschläge für die in Umfangsrichtung wirkenden Energiespeicher. Durch das zusätzliche Anschlagelement kann die Ausdehnung, insbesondere die Höhe, der zugehörigen Anprägung reduziert werden, was mit einer geringeren Materialabstreckung beim Prägen verbunden ist. Der gewonnene Bauraum wird zur Anbringung eines zusätzlichen vorzugsweise gehärteten Anschlagelements genutzt, das spielfrei an der Anprägung angebracht ist. Dadurch kann das Verschleißverhalten des Torsionsschwingungsdämpfers verbessert werden.

Ein bevorzugtes Ausführungsbeispiel des Torsionsschwingungsdämpfers ist dadurch gekennzeichnet, dass das Anschlagelement mindestens eine Anlagefläche aufweist, die an einer Formschlussfläche anliegt, die an der Anprägung ausgebildet ist und sich senkrecht zur Umfangsrichtung erstreckt. Dadurch wird eine stabile Kraft- und/oder Drehmomentübertragung in einer Relativverdrehrichtung zwischen den beiden Teilen ermöglicht. Die Umfangsrichtung bezieht sich im Rahmen der vorliegenden Erfindung auf die Drehachse des Torsionsschwingungsdämpfers.

Ein weiteres bevorzugtes Ausführungsbeispiel des Torsionsschwingungsdämpfers ist dadurch gekennzeichnet, dass das Anschlagelement zwei entgegengesetzte Anlageflächen aufweist, die jeweils an einer Formschlussfläche anliegen, die an der Anprägung ausgebildet ist und sich senkrecht zur Umfangsrichtung erstreckt. Dadurch wird eine stabile Kraft- und/oder Drehmomentübertragung in entgegengesetzten Relativverdrehrichtungen zwischen den beiden Teilen ermöglicht.

Ein weiteres bevorzugtes Ausführungsbeispiel des Torsionsschwingungsdämpfers ist dadurch gekennzeichnet, dass das Anschlagelement zwei Paare entgegengesetzte Anlageflächen aufweist, die sich senkrecht zur Umfangsrichtung erstrecken und an Formschlussflächen anliegen, die an zwei axialen Anprägungen ausgebildet sind, die an zwei Blechformteilen des verdrehbaren Teils vorgesehen sind. Bei dem einen Blechformteil handelt es sich vorzugsweise um ein Primärschwungrad. Bei dem anderen Blechformteil handelt es sich vorzugsweise um einen Deckel, der an dem Primärschwungrad befestigt ist.

Ein weiteres bevorzugtes Ausführungsbeispiel des Torsionsschwingungsdämpfers ist dadurch gekennzeichnet, dass das Anschlagelement mindestens einen Anschlagelementverzahnungsabschnitt aufweist, der sich mit einem Anprägungsverzahnungsabschnitt in Eingriff befindet, der an der Anprägung ausgebildet ist und sich in Umfangsrichtung erstreckt. Die Umfangsrichtung bezieht sich auf die Drehachse des Torsionsschwingungsdämpfers. Die in Eingriff befindlichen Verzahnungsabschnitte ermöglichen eine stabile Kraft- und/oder Drehmomentübertragung in entgegengesetzten Relativverdrehrichtungen zwischen den beiden Teilen. Ein weiteres bevorzugtes Ausführungsbeispiel des Torsionsschwingungsdämpfers ist dadurch gekennzeichnet, dass das Anschlagelement zwei Anschlagelementverzahnungsabschnitte aufweist, die sich mit jeweils einem Anprägungsverzahnungsabschnitt in Eingriff befinden, der an der Anprägung ausgebildet ist und sich in Umfangsrichtung erstreckt. Die Anschlagelementverzahnungsabschnitte sind vorzugsweise radial innen und radial außen an dem Anschlagelement ausgebildet.

Ein weiteres bevorzugtes Ausführungsbeispiel des Torsionsschwingungsdämpfers ist dadurch gekennzeichnet, dass das mindestens eine Anschlagelement durch mindestens ein zusätzliches Befestigungselement an der Anprägung befestigt ist. Das zusätzliche Befestigungselement trägt nicht zur Kraft- und/oder Drehmomentübertragung bei.

Ein weiteres bevorzugtes Ausführungsbeispiel des Torsionsschwingungsdämpfers ist dadurch gekennzeichnet, dass das zusätzliche Befestigungselement von einer Nietwarze gebildet wird, die aus der Anprägung herausgedrückt ist und sich durch ein Durchgangsloch in dem Anschlagelement hindurch erstreckt. Das liefert den Vorteil, dass das Blechformteil mit der Anprägung nicht durchbrochen werden muss.

Ein weiteres bevorzugtes Ausführungsbeispiel des Torsionsschwingungsdämpfers ist dadurch gekennzeichnet, dass das mindestens eine Anschlagelement durch mindestens eine Verstemmung an der Anprägung befestigt ist. Die Verstemmung trägt nicht zur Kraft- und/oder Drehmomentübertragung bei.

Ein weiteres bevorzugtes Ausführungsbeispiel des Torsionsschwingungsdämpfers ist dadurch gekennzeichnet, dass das Anschlagelement einstückig aus einem gehärteten und/oder vergüteten Material gebildet ist. Dadurch kann die Verschleißfestigkeit deutlich erhöht werden. Der Härtewert des Anschlagelements ist generell frei wählbar. Vorzugsweise liegt der Härtewert des Anschlagelements unterhalb der Härte der in Umfangsrichtung wirkenden Energiespeicher, damit der Verschleiß nicht auf die Energiespeicher übertragen wird.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind. Es zeigen:
- Figur 1: eine perspektivische Darstellung eines Ausschnitts eines Torsionsschwingungsdämpfers mit einem Anschlagelement gemäß einem ersten Ausführungsbeispiel;
- Figur 2: den Ausschnitt aus Figur 1 im Schnitt;
- Figur 3: das Anschlagelement aus den Figuren 1 und 2 in der Draufsicht;
- Figur 4: die Ansicht eines Schnitts entlang der Linie IV-IV in Figur 3;
- Figur 5: das Anschlagelement aus den Figuren 3 und 4 in der Vorderansicht;
- Figur 6: eine perspektivische Darstellung des Anschlagelements aus den Figuren 3 bis 5;
- Figur 7: ein Primärschwungrad des Torsionsschwingungsdämpfers aus den Figuren 1 und 2 in der Draufsicht;
- Figur 8: die Ansicht eines Schnitts entlang der Linie VIII-VIII in Figur 7;
- Figur 9: eine perspektivische Darstellung eines vergrößerten Ausschnitts aus Figur 7;
- Figur 10: eine perspektivische Darstellung des Ausschnitts eines Torsionsschwingungsdämpfers mit einem Anschlagelement gemäß einem weiteren Ausführungsbeispiel;
- Figur 11: den Ausschnitt aus Figur 10 im Schnitt;
- Figur 12: eine perspektivische Darstellung eines Ausschnitts eines Torsionsschwingungsdämpfers mit einem Anschlagelement gemäß einem weiteren Ausführungsbeispiel;
- Figur 13: den Ausschnitt aus Figur 12 im Schnitt;
- Figur 14: einen Ausschnitt eines Torsionsschwingungsdämpfers mit einem Anschlagelement gemäß einem weiteren Ausführungsbeispiel im Schnitt;
- Figur 15: eine vergrößerte, perspektivische Darstellung des Schnitts aus Figur 14;
- Figur 16: den Ausschnitt aus den Figuren 14 und 15 in einem Umfangsschnitt;
- Figur 17: eine perspektivische Darstellung des Umfangsschnitts aus Figur 16;
- Figur 18: eine perspektivische Darstellung des Anschlagelements aus den Figuren 14 bis 17 im eingebauten Zustand;
- Figur 19: das Anschlagelement aus Figur 18 in der Vorderansicht;
- Figur 20: die Ansicht eines Schnitts entlang der Linie XX-XX in Figur 19;
- Figur 21: das Anschlagelement aus den Figuren 19 und 20 in der Draufsicht und
- Figur 22: eine perspektivische Darstellung des Anschlagelements aus den Figuren 19 bis 21.

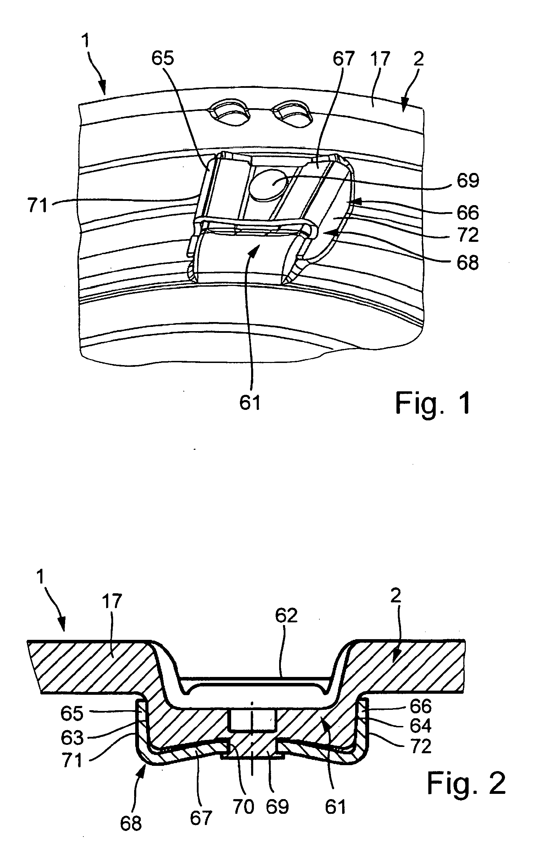

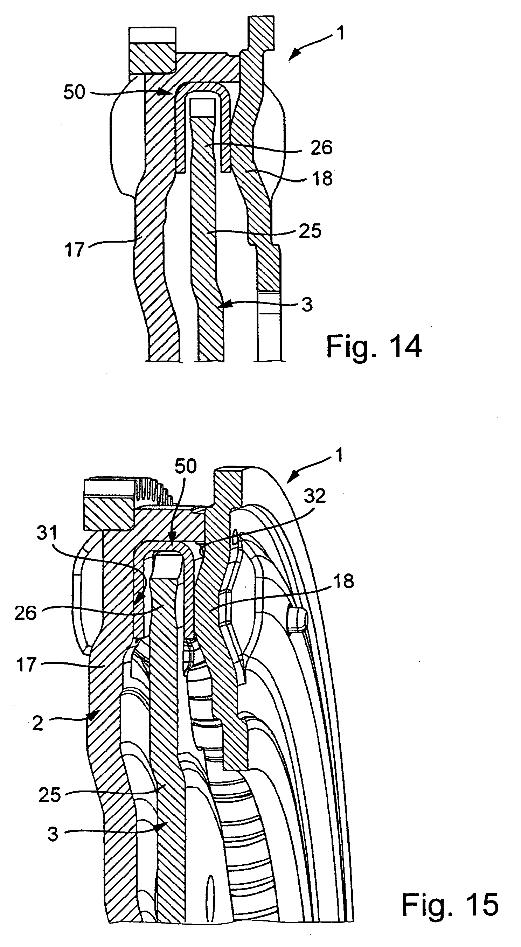

In den Figuren 1, 2, 10, 11, 12, 13 ist ein Torsionsschwingungsdämpfer 1 nur ausschnittsweise dargestellt. In den Figuren 14 bis 18 ist ein Torsionsschwingungsdämpfer 1 in verschiedenen Ansichten ausführlicher dargestellt. Zunächst wird der in den Figuren 14 bis 18 ausführlicher dargestellte Torsionsschwingungsdämpfer 1 beschrieben.

Der in den Figuren 14 bis 18 in verschiedenen Ansichten dargestellte Torsionsschwingungsdämpfer 1 bildet ein Zweimassenschwungrad, das eine an einer nicht gezeigten Abtriebswelle einer Brennkraftmaschine befestigbare erste oder Primärschwungmasse 2 sowie eine zweite oder Sekundärschwungmasse 3 aufweist. Auf der zweiten Schwungmasse 3 ist eine Reibungskupplung unter Zwischenlegung einer Kupplungsscheibe befestigbar, über die eine ebenfalls nicht dargestellte Eingangswelle eines Getriebes zu- und abkuppelbar ist. Die Schwungmassen 2 und 3, die auch als Schwungräder bezeichnet werden, sind über eine Lagerung, die als Wälz- oder Gleitlagerung ausgebildet sein kann, zueinander verdrehbar gelagert. Zwischen den beiden Schwungmassen 2 und 3 ist eine Dämpfungseinrichtung 6 wirksam, die Energiespeicher 5, 7 umfasst, von denen zumindest einer durch Schraubendruckfedern 8, 9 gebildet ist. Die Schraubendruckfeder 9 ist vollständig in dem durch die Windungen der Feder 8 gebildeten Raum aufgenommen oder mit anderen Worten, die beiden Schraubenfedern 8 und 9 sind über ihre Längserstreckung betrachtet ineinander geschachtelt.

Die beiden Schwungmassen 2 und 3 besitzen Beaufschlagungsbereiche 11 bis 14 für die Energiespeicher 5, 7. Bei dem dargestellten Ausführungsbeispiel sind die Beaufschlagungsbereiche 11 bis 14 durch in die die erste Schwungmasse 2 bildenden Blechformteile 17, 18 eingebrachte Anprägungen 21, 22 gebildet. In axialer Richtung zwischen den Anprägungen 21, 22 vorgesehene Beaufschlagungsbereiche 23, 24 sind durch zumindest ein mit der Sekundärschwungmasse 3, beispielsweise über Niete, verbundenes flanschartiges Beaufschlagungsteil 25 gebildet. Dieses Bauteil 25 dient als Drehmomentübertragungselement zwischen den Energiespeichern 5, 7 und der Schwungmasse 3. Die Beaufschlagungsbereiche 23, 24 sind durch am Außenumfang des flanschartigen Beaufschlagungsmittels 25 vorgesehene radiale Arme beziehungsweise Ausleger 26 gebildet.

Das durch Kaltumformung von Blechmaterial hergestellte Bauteil 17 dient zur Befestigung der ersten Schwungmasse 2 beziehungsweise des gesamten geteilten Schwungrades 1 an der Abtriebswelle einer Brennkraftmaschine. Radial außen ist das Bauteil 17 mit dem ebenfalls aus Blech hergestellten Bauteil 18 verbunden, das auch als Deckel bezeichnet wird. Die beiden Bauteile 17 und 18 bilden einen ringförmigen Raum 31, der hier einen torusartigen Bereich 32 aufweist. Der ringförmige Raum 31 beziehungsweise der torusartige Bereich 32 kann zumindest teilweise mit einem viskosen Medium, wie beispielsweise Fett, gefüllt sein.

In Umfangsrichtung betrachtet, zwischen den Anformungen beziehungsweise den Beaufschlagungsbereichen 11 bis 14 bilden die Bauteile 17, 18 Ausbuchtungen 33, 34, die den hier torusartigen Bereich 32 begrenzen und die Energiespeicher 5, 7 aufnehmen sowie sowohl in radialer als auch in axialer Richtung führen. Zumindest beim Rotieren der Einrichtung 1 stützen sich zumindest die Windungen der Federn 8 an den den torusartigen Bereich 32 radial außen begrenzenden Bereichen des Bauteils 17 und/oder 18 ab.

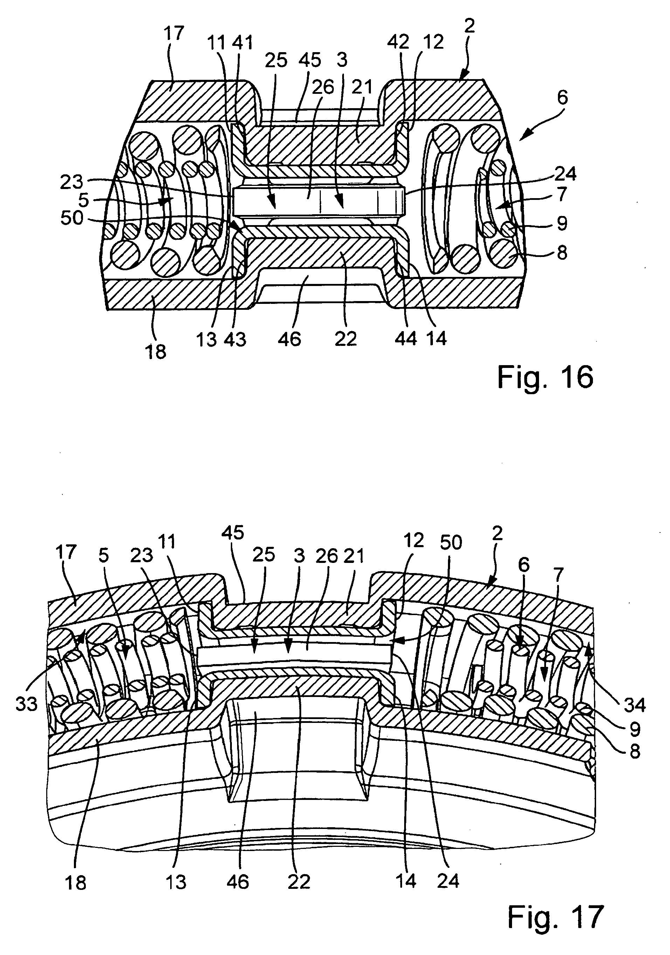

Aus den Figuren 16 und 17 ist ersichtlich, dass die Anprägungen 21, 22, weiche zwischen benachbarten Energiespeichern 5, 7 eingreifen und umfangsmäßige Abstützflächen 41 bis 44 für diese bilden, durch axiale, von der dem ringförmigen Raum 31 beziehungsweise der Kammer 31 abgewandten Seite her in das hier aus Stahlblech bestehende Bauteil 17 eingebrachte Vertiefungen 45, 46 gebildet sind.

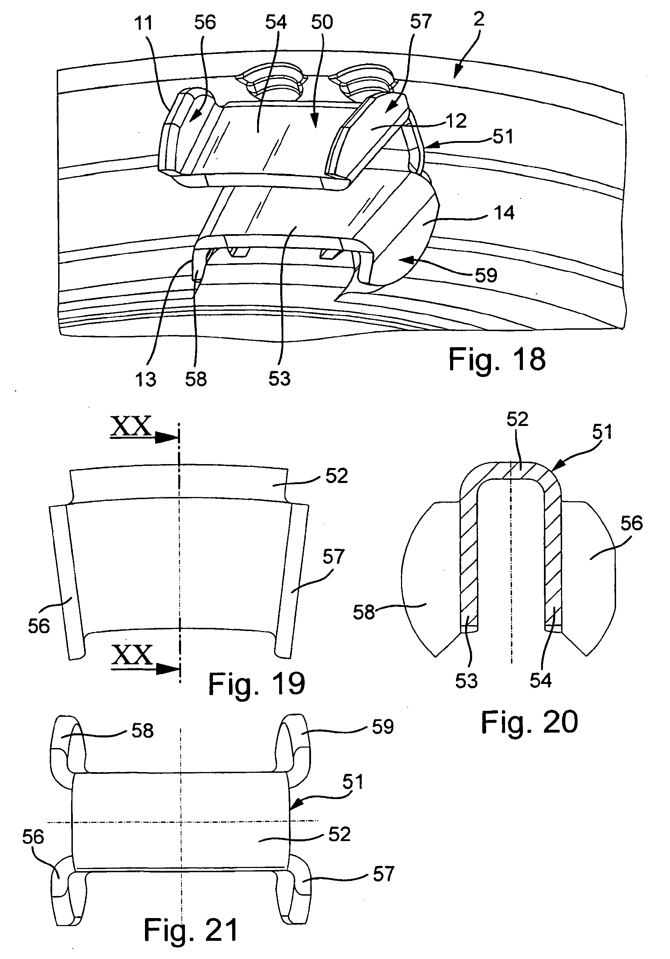

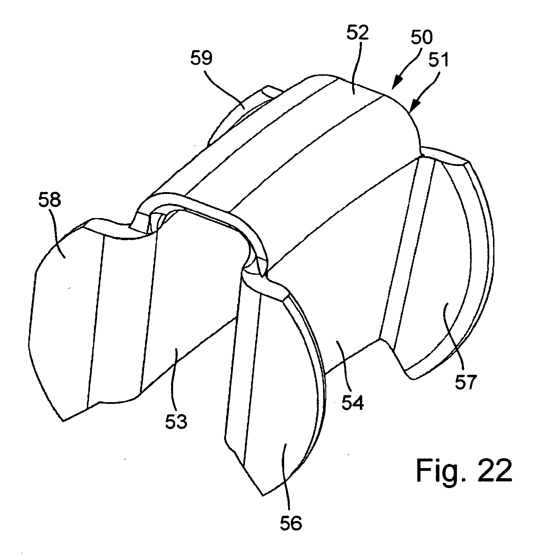

Gemäß einem wesentlichen Aspekt der vorliegenden Erfindung sind die Beaufschlagungsbereiche 11 bis 14 nicht direkt an den Anprägungen 21, 22.ausgebildet, sondern an einem Anschlagelement 50. Das Anschlagelement 50 ist in den Figuren 19 bis 22 allein in verschiedenen Ansichten dargestellt. In diesen Figuren sieht man, dass das Anschlagelement 50 einen U-förmigen Grundkörper 51 mit einer Basis 52 aufweist, von der zwei Schenkel 53, 54 ausgehen. Von den Schenkeln 53, 54 sind wiederum jeweils zwei Ohren 56, 57 und 58, 59 um etwa 90 Grad abgewinkelt.

Die Ohren 56 bis 59 weisen an ihrer Außenseite jeweils einen der Beaufschlagungsbereiche 11 bis 14 auf. Mit ihrer Innenseite liegen die Ohren 56 bis 59 paarweise jeweils an einer der Anprägungen 21, 22 an, wie man in den Figuren 16 und 17 sieht. Dabei bilden die Innenseiten der Ohren 56 bis 59 Anschlagflächen, die an den umfangsmäßigen Abstützflächen 41 bis 44 der Anprägungen 21, 22 anliegen. Daher werden die umfangsmäßigen Abstützflächen 41 bis 44 auch als Formschlussflächen bezeichnet. Das Anschlagelement 50 kann in der Primärschwungmasse 2, insbesondere mit den Blechformteilen 17, 18, verstemmt sein.

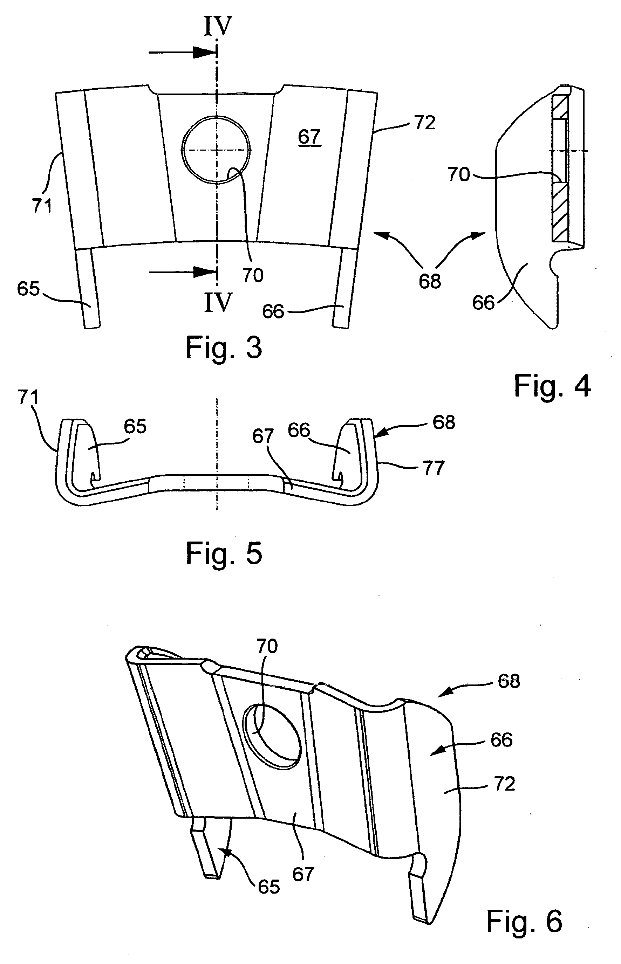

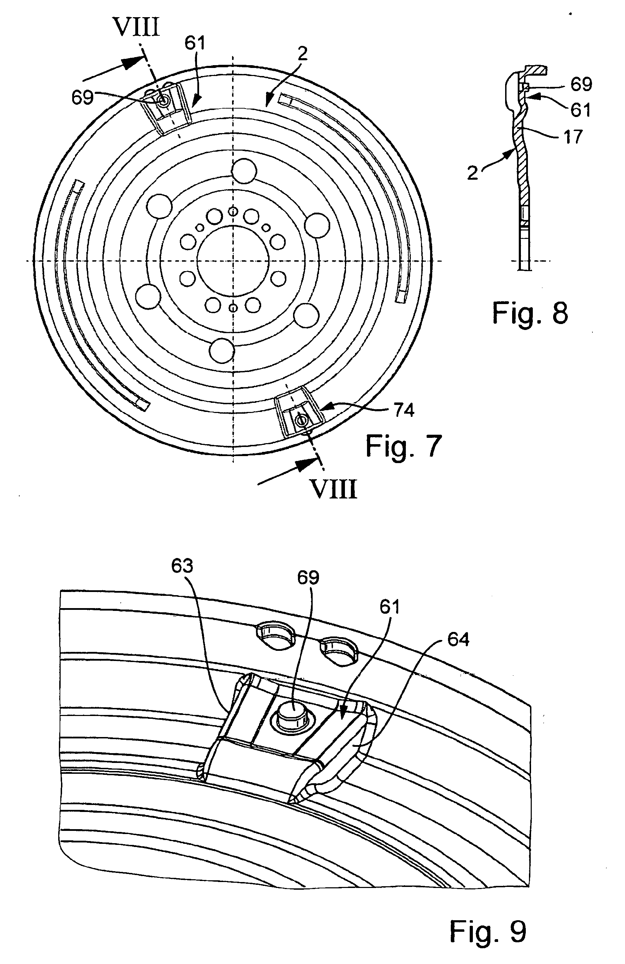

In den Figuren 1 bis 13 sind Ausschnitte eines Zweimassenschwungrads 1 gemäß verschiedenen Ausführungsbeispielen dargestellt. Das Zweimassenschwungrad 1 umfasst, wie das in den Figuren 15 bis 18 dargestellte Zweimassenschwungrad 1 eine Primärschwungmasse 2 und eine Sekundärschwungmasse 3. Um Wiederholungen zu vermeiden, wird auf die vorangegangene Beschreibung der Figuren 14 bis 18 verwiesen. Zur Bezeichnung gleicher oder ähnlicher Teile werden die gleichen Bezugszeichen verwendet.

In den Figuren 1 bis 9 ist ein Ausführungsbeispiel in verschiedenen Ansichten dargestellt, bei dem an einer Primärschwungmasse 2 zwei Anprägungen 61 und 74 ausgebildet sind, die diametral angeordnet sind. Die Anprägung 61 wird von einer Vertiefung 62 in dem Blechformteil 17 der Primärschwungmasse 2 gebildet. An der Anprägung 61 sind zwei entgegengesetzte umfangsmäßige Abstützflächen 63, 64 vorgesehen, die Formschlussflächen für zwei Schenkel 65, 66 eines Anschlagelements 68 bilden. Dabei stellen die Innenseiten der Schenkel 65, 66 Anlageflächen dar, die an den Formschlussflächen 63, 64 der Anprägung 61 anliegen. Die beiden Schenkel 65, 66 sind durch eine Basis 67 verbunden, so dass das Anschlagelement 68 im Wesentlichen eine U-förmige Gestalt hat.

Das Anschlagelement 68 ist mit Hilfe einer Nietwarze 69, die im Bereich der Anprägung 61 beziehungsweise der Vertiefung 62 aus dem Blechformteil 17 herausgedrückt ist, an der Anprägung 61 befestigt. Zu diesem Zweck erstreckt sich die Nietwarze 69 durch ein Durchgangsloch 70 hindurch, das in der Basis 67 des Anschlagelements 68 ausgespart ist. Die Außenseiten der Schenkel 65, 66 des Anschlagelements 68 bilden Beaufschlagungsbereiche 71, 72 für zwei in Umfangsrichtung benachbarte Energiespeicher.

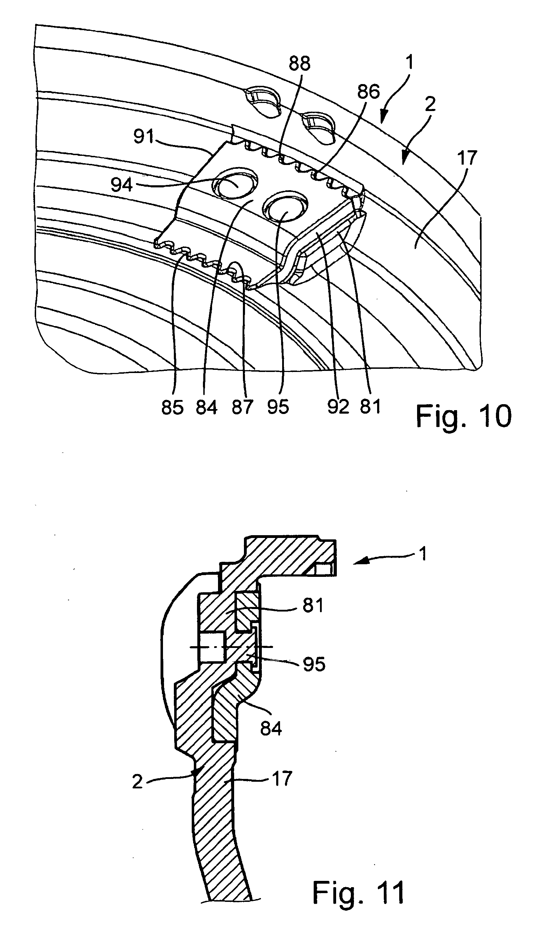

Bei dem in den Figuren 10 und 11 dargestellten Ausführungsbeispiel ist an dem Blechformteil 17 der Primärschwungmasse 2 eine Anprägung 81 ausgebildet. Ein Anschlagelement 84 ist formschlüssig mit der Anprägung 81 verbunden. Zu diesem Zweck weist das Anschlagelement 84 radial innen und radial außen jeweils einen Anschlagverzahnungsabschnitt 85, 86 auf. Der radial innere Anschlagverzahnungsabschnitt 85 befindet sich in Eingriff mit einem Anprägungsverzahnungsabschnitt 87, der im Bereich der Anprägung 81 an dem Blechformteil 17 ausgebildet ist. Der radial äußere Anschlagverzahnungsabschnitt 86 befindet sich analog in Eingriff mit einem weiteren Anprägungsverzahnungsabschnitt 88, der ebenfalls an dem Blechformteil 17 im Bereich der Anprägung 81 ausgebildet ist.

Durch die miteinander in Eingriff befindlichen Verzahnungsabschnitte 85 bis 88 ist das Anschlagelement 84 formschlüssig mit der Anprägung 81 verbunden. Zur Kraft- und/oder Drehmomentübertragung sind an dem Anschlagelement 84 zwei in Umfangsrichtung entgegengesetzte Beaufschlagungsbereiche 91, 92 für in Umfangsrichtung benachbarte Energiespeicher ausgebildet. Mit Hilfe von zwei Nietwarzen 94, 95, die aus dem Blechformteil 17 herausgedrückt sind, ist das Anschlagelement 84 an der Anprägung 81 gehalten.

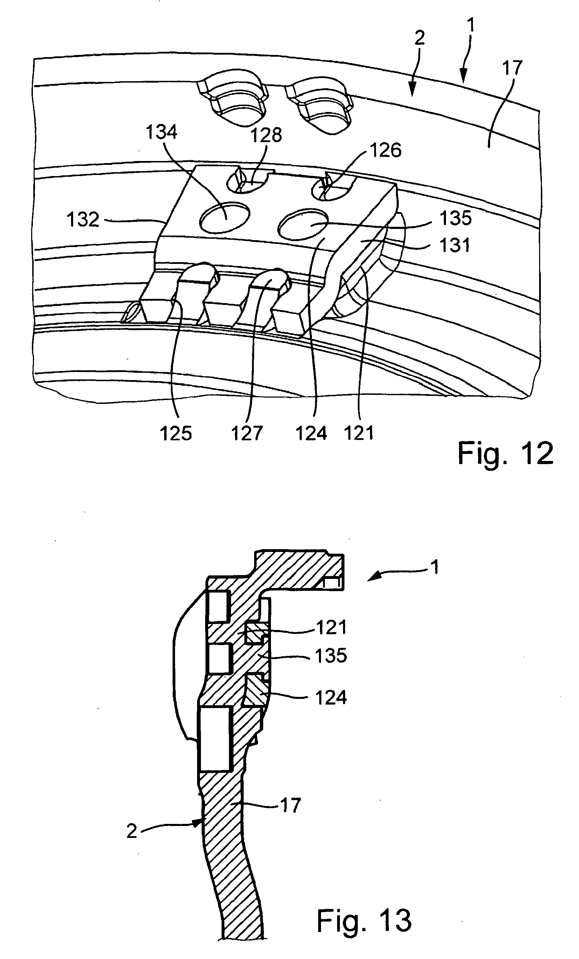

In den Figuren 12 und 13 ist ein ähnliches Ausführungsbeispiel wie in den Figuren 10 und 11 dargestellt. An einer Anprägung 121 des Blechformteils 17 ist ein Anschlagelement 124 formschlüssig angebracht. Zur formschlüssigen Verbindung umfasst das Anschlagelement 124 zwei Anschlagverzahnungsabschnitte 125, 126, die sich jeweils mit einem Anprägungsverzahnungsabschnitt 127, 128 der Primärschwungmasse 2 in Eingriff befinden. An dem Anschlagelement 124 sind zwei in Umfangsrichtung entgegengesetzte Beaufschlagungsbereiche 131, 132 für in Umfangsrichtung benachbarte Energiespeicher ausgebildet. Das Anschlagelement 124 ist mit Hilfe von Nietwarzen 134, 135, die aus dem Blechformteil 17 im Bereich der Anprägung 121 herausgedrückt sind, an diesem befestigt.

### Bezugszeichenliste

1. Torsionsschwingungsdämpfer
2. Primärschwungmasse
3. Sekundärschwungmasse
5. Energiespeicher
6. Dämpfungseinrichtung
7. Energiespeicher
8. Schraubendruckfeder
9. Schraubendruckfeder
11. Beaufschlagungsbereich
12. Beaufschlagungsbereich
13. Beaufschlagungsbereich
14. Beaufschlagungsbereich
17. Blechformteil
18. Blechformteil
21. Anprägung
22. Anprägung
23. Beaufschlagungsbereich
24. Beaufschlagungsbereich
25. flanschartiges Bauaufschlagungsmittel
26. Ausleger
31. ringförmiger Raum
32. torusartiger Bereich
33. Ausbuchtung
34. Ausbuchtung
41. Abstützfläche
42. Abstützfläche
43. Abstützfläche
44. Abstützfläche
45. Vertiefung
46. Vertiefung
94. Nietwarzen
95. Nietwarzen
121. Anprägung
124. Anschlagelement
50. Anschlagelement
51. U-förmiger Grundkörper
52. Basis
53. Schenkel
54. Schenkel
56. Ohr
57. Ohr
58. Ohr
59. Ohr
61. Anprägung
62. Vertiefung
63. Abstützfläche
64. Abstützfläche
65. Schenkel
66. Schenkel
67. Basis
68. Anschlagelement
69. Nietwarze
70. Durchgangsloch
71. Beaufschlagungsbereich
72. Beaufschlagungsbereich
74. Anprägung
81. Anprägung
84. Anschlagelement
85. Anschlagverzahnungsabschnitt
86. Anschlagverzahnungsabschnitt
87. Anprägungsverzahnungsabschnitt
88. Anprägungsverzahnungsabschnitt
91. Beaufschlagungsbereich
92. Beaufschlagungsbereich
125. Anschlagverzahnungsabschnitt
126. Anschlagverzahnungsabschnitt
127. Anprägungsverzahnungsabschnitt
128. Anprägungsverzahnungsabschnitt
131. Beaufschlagungsbereich
132. Beaufschlagungsbereich
134. Nietwarzen
135. Nietwarzen

## Patentansprüche

1. Torsionsschwingungsdämpfer mit mindestens zwei entgegen der Wirkung einer Dämpfungseinrichtung (6) mit in Umfangsrichtung wirkenden Energiespeichern (5,7) zueinander verdrehbaren Teilen (2,3), von denen eines mindestens ein Blechformteil (17,18) mit mindestens einer axialen Anprägung (21,22;61;81;121) umfasst, die zwischen zwei in Umfangsrichtung benachbarte Energiespeicher (5,7) eingreift, **dadurch gekennzeichnet, dass** mindestens ein zusätzliches Anschlagelement (50;68;84;124) zur Kraft- und/oder Drehmomentübertragung formschlüssig mit der Anprägung (21,22;61;81;121) verbunden ist.

2. Torsionsschwingungsdämpfer nach Anspruch 1, **dadurch gekennzeichnet, dass** das Anschlagelement (50;68;84;124) mindestens eine Anlagefläche aufweist, die an einer Formschlussfläche anliegt, die an der Anprägung (21,22,61,81,121) ausgebildet ist und sich senkrecht zur Umfangsrichtung erstreckt.

3. Torsionsschwingungsdämpfer nach einem der vorhergehenden Ansprüche, **dadurch gekennzeichnet, dass** das Anschlagelement (50;68;84;124) zwei entgegengesetzte Anlageflächen aufweist, die jeweils an einer Formschlussfläche anliegen, die an der Anprägung (21,22;61;81;121) ausgebildet ist und sich senkrecht zur Umfangsrichtung erstreckt.

4. Torsionsschwingungsdämpfer nach einem der vorhergehenden Ansprüche, **dadurch gekennzeichnet, dass** das Anschlagelement (50) zwei Paare entgegengesetzte Anlageflächen aufweist, die sich senkrecht zur Umfangsrichtung erstrecken und an Formschlussflächen anliegen, die an zwei axialen Anprägungen (21,22) ausgebildet sind, die an zwei Blechförmteiien des verdrehbaren Teils vorgesehen sind.

5. Torsionsschwingungsdämpfer nach einem der vorhergehenden Ansprüche, **dadurch gekennzeichnet, dass** das Anschlagelement (84;124) mindestens einen Anschlagelementverzahnungsabschnitt (85,86;125,126) aufweist, der sich mit einem Anprägungsverzahnungsabschnitt in Eingriff befindet, der an der Anprägung (81;121) ausgebildet ist und sich in Umfangsrichtung erstreckt.

6. Torsionsschwingungsdämpfer nach einem der vorhergehenden Ansprüche, **dadurch gekennzeichnet, dass** das Anschlagelement (84;124) zwei Anschlagelementverzahnungsabschnitte (85,86;125,126) aufweist, die sich mit jeweils einem Anprägungsverzahnungsabschnitt in Eingriff befinden, der an der Anprägung (81;121) ausgebildet ist und sich in Umfangsrichtung erstreckt.

7. Torsionsschwingungsdämpfer nach einem der vorhergehenden Ansprüche, **dadurch gekennzeichnet, dass** das mindestens eine Anschlagelement (50;68;84;124) durch mindestens ein zusätzliches Befestigungselement (69;94,95;134,135) an der Anprägung (21,22;61;81;121) befestigt ist.

8. Torsionsschwingungsdämpfer nach Anspruch 7, **dadurch gekennzeichnet, dass** das zusätzliche Befestigungselement (69;94,95;134,135) von einer Nietwarze gebildet wird, die aus der Anprägung herausgedrückt ist und sich durch ein Durchgangsloch (70) in dem Anschlagelement hindurch erstreckt.

9. Torsionsschwingungsdämpfer nach einem der vorhergehenden Ansprüche, **dadurch gekennzeichnet, dass** das mindestens eine Anschlagelement (50) durch mindestens eine Verstemmung an der Anprägung (21,22) befestigt ist.

10. Torsionsschwingungsdämpfer nach einem der vorhergehenden Ansprüche, **dadurch gekennzeichnet, dass** das Anschlagelement (50;68;84;124) einstückig aus einem gehärteten und/oder vergüteten Material gebildet ist.

## Claims

1. Torsional vibration damper having at least two parts (2, 3) which can be rotated with respect to one another by way of energy stores (5, 7) which act in the circumferential direction counter to the action of a damping device (6), of which parts (2, 3) one comprises at least one shaped sheet-metal part (17, 18) with at least one axial embossing (21, 22; 61; 81; 121) which engages between two energy stores (5, 7) which are adjacent in the circumferential direction, **characterized in that** at least one additional stop element (50; 68; 84; 124) is connected to the embossing (21, 22; 61; 81; 121) in a positively locking manner for the transmission of force and/or torque.

2. Torsional vibration damper according to Claim 1, **characterized in that** the stop element (50; 68; 84; 124) has at least one bearing face which bears against a positively locking face which is formed on the embossing (21, 22; 61; 81; 121) and extends perpendicularly with respect to the circumferential direction.

3. Torsional vibration damper according to one of the preceding claims, **characterized in that** the stop element (50; 68; 84; 124) has two opposed bearing faces which in each case bear against a positively locking face which is formed on the embossing (21, 22; 61; 81; 121) and extends perpendicularly with respect to the circumferential direction.

4. Torsional vibration damper according to one of the preceding claims, **characterized in that** the stop element (50) has two pairs of opposed bearing faces which extend perpendicularly with respect to the circumferential direction and bear against positively locking faces which are formed on two axial embossings (21, 22) which are provided on two shaped sheet-metal parts of the rotatable part.

5. Torsional vibration damper according to one of the preceding claims, **characterized in that** the stop element (84; 124) has at least one stop-element toothing section (85, 86; 125, 126) which is in engagement with an embossing toothing section which is formed on the embossing (81; 121) and extends in the circumferential direction.

6. Torsional vibration damper according to one of the preceding claims, **characterized in that** the stop element (84; 124) has two stop-element toothing sections (85, 86; 125, 126) which are in engagement with in each case one embossing toothing section which is formed on the embossing (81; 121) and extends in the circumferential direction.

7. Torsional vibration damper according to one of the preceding claims, **characterized in that** the at least one stop element (50; 68; 84; 124) is fastened to the embossing (21, 22; 61; 81; 121) by way of at least one additional fastening element (69; 94, 95; 134, 135).

8. Torsional vibration damper according to Claim 7, **characterized in that** the additional fastening element (69; 94, 95; 134, 135) is formed by a rivet nipple which is pressed out of the embossing and extends through a through hole (70) in the stop element.

9. Torsional vibration damper according to one of the preceding claims, **characterized in that** the at least one stop element (50) is fastened to the embossing (21, 22) by way of at least one caulked portion.

10. Torsional vibration damper according to one of the preceding claims, **characterized in that** the stop element (50; 68; 84; 124) is formed in one piece from a hardened and/or tempered material.

## Revendications

1. Amortisseur de vibrations de torsion, comprenant au moins deux pièces (2, 3) pouvant tourner l'une par rapport à l'autre à l'encontre de l'action d'un dispositif d'amortissement (6) pourvu d'accumulateurs d'énergie (5, 7) agissant dans la direction périphérique, parmi lesquelles pièces l'une comporte au moins une pièce formée en tôle (17, 18) pourvue d'au moins une partie estampée axiale (21, 22 ; 61 ; 81 ; 121) qui s'engage entre deux accumulateurs d'énergie (5, 7) adjacents dans la direction périphérique, **caractérisé en ce qu'**au moins un élément de butée supplémentaire (50 ; 68 ; 84 ; 124) est relié à la partie estampée (21, 22 ; 61 ; 81 ; 121) par engagement par coopération de formes en vue d'une transmission de force et/ou de couple.

2. Amortisseur de vibrations de torsion selon la revendication 1, **caractérisé en ce que** l'élément de butée (50 ; 68 ; 84 ; 124) comprend au moins une surface de butée qui s'applique contre une surface d'engagement par coopération de formes qui est réalisée sur la partie estampée (21, 22 ; 61 ; 81 ; 121) et s'étend perpendiculairement à la direction périphérique.

3. Amortisseur de vibrations de torsion selon l'une quelconque des revendications précédentes, **caractérisé en ce que** l'élément de butée (50 ; 68 ; 84 ; 124) comprend deux surfaces de butée opposées qui s'appliquent respectivement contre une surface d'engagement par coopération de formes qui est réalisée sur la partie estampée (21, 22 ; 61 ; 81 ; 121) et s'étend perpendiculairement à la direction périphérique.

4. Amortisseur de vibrations de torsion selon l'une quelconque des revendications précédentes, **caractérisé en ce que** l'élément de butée (50) comprend deux paires de surfaces de butée opposées qui s'étendent perpendiculairement à la direction périphérique et s'appliquent contre des surfaces d'engagement par coopération de formes qui sont réalisées sur deux parties estampées axiales (21, 22) qui sont prévues sur deux pièces formées en tôle de la pièce pouvant tourner.

5. Amortisseur de vibrations de torsion selon l'une quelconque des revendications précédentes, **caractérisé en ce que** l'élément de butée (84 ; 124) comprend au moins une portion dentée d'élément de butée (85, 86 ; 125, 126) qui se trouve en engagement avec une portion dentée de partie estampée qui est réalisée sur la partie estampée (81 ; 121) et s'étend dans la direction périphérique.

6. Amortisseur de vibrations de torsion selon l'une quelconque des revendications précédentes, **caractérisé en ce que** l'élément de butée (84 ; 124) comprend deux portions dentées d'élément de butée (85, 86 ; 125, 126) qui se trouvent en engagement avec une portion dentée de partie estampée respective qui est réalisée sur la partie estampée (81 ; 121) et s'étend dans la direction périphérique.

7. Amortisseur de vibrations de torsion selon l'une quelconque des revendications précédentes, **caractérisé en ce qu'**au moins un élément de butée (50 ; 68 ; 84 ; 124) est fixé sur la partie estampée (21, 22 ; 61 ; 81 ; 121) au moyen d'au moins un élément de fixation supplémentaire (69 ; 94, 95 ; 134, 135).

8. Amortisseur de vibrations de torsion selon la revendication 7, **caractérisé en ce que** l'élément de fixation supplémentaire (69 ; 94, 95 ; 134, 135) est formé par un bouton de rivet qui est pressé hors de la partie estampée et s'étend à travers un trou débouchant (70) dans l'élément de butée.

9. Amortisseur de vibrations de torsion selon l'une quelconque des revendications précédentes, **caractérisé en ce qu'**au moins un élément de butée (50) est fixé sur la partie estampée (21, 22) au moyen d'au moins un matage.

10. Amortisseur de vibrations de torsion selon l'une quelconque des revendications précédentes, **caractérisé en ce que** l'élément de butée (50 ; 68 ; 84 ; 124) est réalisé d'un seul tenant en un matériau trempé et/ou revenu.
